# EUROPÄISCHE PATENTANMELDUNG

(11) **EP 1 037 427 A1**
(43) Veröffentlichungstag der Anmeldung: **20.09.2000**
(21) Anmeldenummer: 99810237.0
(22) Anmeldetag: 17.03.1999
(51) Int. Cl.: H04L 9/32

(54) **Multi Sicherheitsprotokollfähigkeit in Messaging Systemen**

(71) Anmelder: Ascom Systec AG, 5506 Mägenwil (CH)
(72) Erfinder: Utinger, Christoph, Oetwil am See (CH); Zeller, Francois, 5506 Mägenwil (FR); Zimmerman, Daniel, 5200 Brugg (CH); Schnider, Herbert, 5405 Dättwil (CH); Berglas, Stefan, 8118 Pfaffhausen (CH)
(74) Vertreter: Roshardt, Werner Alfred, Dipl.-Phys.

(57) **Zusammenfassung**

Damit eine sichere Datenübertragung auch zwischen Messaging Systemen (100, 200) gewährleistet ist, die wohl unterschiedliche, aber auf dem "public key"-Verfahren basierende, Sicherheitsprotokolle wie z.B. S/MIME, IDEAsecure, Open PGP (PGP 2.3.6, PGP 5.0) oder PEM verwenden, werden die Schlüsselzertifikate fremder Benutzer in eigene Schlüsselzertifikate konvertiert. Dazu werden die Schlüsselzertifikate von einer Zertifikatsimport- und-analysevorrichtung (112) überprüft und vom Zertifikatgenerator (111) mit den so gewonnenen Daten ein eigenes Standardzertifikat für den fremden Benutzer (203) erstellt und auf dem Certification Server (102) veröffentlicht, in welchem zusätzlich Angaben über das von diesem Benutzer verwendete Sicherheitsprotokoll gespeichert sind. Im Gegenzug werden in einer Konversionseinheit (120) auch Standardzertifikate eigener Benutzer (103.1, 103.2, 103.3, 103.4) in Schlüsselzertifikate für andere Sicherheitsprotokolle konvertiert und ebenfalls auf dem Certification Server (102) veröffentlicht.

## Beschreibung

### Technisches Gebiet

Die Erfindung betrifft ein Verfahren zur Übertragung elektronischer Nachrichten zwischen Benutzern verschiedener Messaging Systeme, bei denen die Nachrichten zur Gewährleistung der Vertraulichkeit, der Authentizität und der Integrität jeweils mit einem auf dem "public key"-Verfahren basierenden Verschlüsselungsverfahren mit zugehörigem Sicherheitsprotokoll verschlüsselt und die öffentlichen Schlüssel der Systembenutzer durch eine Certification Authority zertifiziert und veröffentlicht werden. Weiter betrifft die Erfindung ein System zur Durchführung dieses Verfahrens.

### Stand der Technik

Die elektronische Datenübertragung hat in den letzten Jahren, nicht zuletzt wegen der immer grösseren Verbreitung des Internet und seiner verschiedenen Dienste, immer mehr zugenommen. Vor allem im Hinblick auf kommerzielle Anwendungen gewinnt daher die Gewährleistung gewisser Sicherheitsanforderungen bei der elektronischen Übertragung von Daten immer mehr an Bedeutung. So ist beispielsweise im Zusammenhang mit Bankgeschäften nicht nur die Vertraulichkeit (niemand ausser dem vom Absender ausdrücklich definierten Empfänger der Nachricht darf diese lesen können), sondern auch die Authentizität (es muss sichergestellt sein, dass sowohl der Empfänger als auch der Absender einer Nachricht diejenigen sind, für die sie sich ausgeben) und die Integrität (die Nachricht darf auf dem Weg vom Absender zum Empfänger nicht bzw. nicht unbemerkt verändert werden) der übermittelten Nachrichten von höchster Wichtigkeit.

Eine Möglichkeit, dieses Ziel zu erreichen, ist die Verschlüsselung der Nachrichten mit sogenannten Hybridverfahren, einer Mischung aus symmetrischer und asymmetrischer Verschlüsselung. Bei symmetrischer Verschlüsselung wird die Nachricht mit ein und demselben Schlüssel ver- bzw. entschlüsselt. Bei asymmetrischer Verschlüsselung werden hierzu zwei verschiedene, aber zusammengehörige, komplementäre Schlüssel verwendet, von denen der sogenannte öffentliche Schlüssel (public key = PUK) veröffentlicht und allen anderen Benutzern bekanntgemacht, und der andere, der private Schlüssel (private key = PIK) geheim gehalten wird.

Zu den "public key"-Verfahren zählen aber nicht nur die Hybridverfahren, sondern auch die reinen asymmetrischen Verschlüsselungsverfahren, welche allerdings den Nachteil haben, dass sie aufwendig und damit langsam sind.

Zusätzlich zur Verschlüsselung können solche Nachrichten vom Absender auch digital unterschrieben werden. Wird hingegen nicht eine Nachricht, sondern der öffentliche Schlüssel eines Benutzers digital unterschrieben, spricht man von einem sogenannten Schlüsselzertifikat, das einem anderen Benutzer zur Überprüfung des PUKs und der Identität dieses Benutzers dient. Wie vertrauenswürdig ein solches Schlüsselzertifikat ist, hängt davon ab, welche Person oder welche Organisation es ausgestellt hat, wie die Verifizierung der Identität des Benutzers durchgeführt wurde (Briefpost, persönliches Vorsprechen mit Personalausweis oder Pass, etc.) und wie gross das Vertrauen der Benutzer in diese Person oder Organisation ist. In einigen Messaging Systemen gibt es allgemein anerkannte Certification Authorities, die Schlüsselzertifikate für die PUKs ihrer Benutzer ausstellen. In anderen Systemen erfolgt die Zertifizierung der Schlüssel durch die Benutzer selber, indem ein Benutzer den PUK eines anderen Benutzers mit seinem eigenen PIK unterschreibt und damit dessen Identität bezeugt.

Auf dem Markt gibt es einige Messaging Systeme, die auf einem "public key"-Verfahren basieren. Viele dieser Messaging Systeme benutzen aber nicht nur verschiedene Methoden zur Zertifizierung, sondern auch unterschiedliche Sicherheitsprotokolle. So legen z.B. die Protokolle S/MIME, IDEAsecure, Open PGP (PGP 2.3.6, PGP 5.0) oder PEM fest, auf welche Weise, d.h. mit welchem Algorithmus die Daten verschlüsselt oder welche Schlüsselzertifikate anerkannt werden.

Das Problem ist, dass viele dieser Messaging Systeme untereinander nicht kompatibel sind. Eine Nachricht, die mit einem bestimmten Messaging System und einem bestimmten Sicherheitsprotokoll erstellt und verschlüsselt wurde, kann nicht mit einem anderen Messaging System, das ein anderes Sicherheitsprotokoll verwendet, entschlüsselt und gelesen werden.

### Darstellung der Erfindung

Aufgabe der Erfindung ist es, ein Verfahren anzugeben, das es einem Benutzer mit einem einzigen Messaging System, welches ein bestimmtes Sicherheitsprotokoll als Standard verwendet, erlaubt, mit den Benutzern anderer Messaging Systeme, die andere Sicherheitsprotokolle verwenden, sicher, d.h. unter Gewährleistung von Vertraulichkeit, Authentizität und Integrität, zu kommunizieren.

Die Lösung der Aufgabe ist durch die Merkmale des Anspruchs 1 definiert. Gemäss der Erfindung unterstützt ein Messaging System bzw. jeder seiner Messagingclients mehrere verschiedene Sicherheitsprotokolle. Als Messagingclient wird dabei das hardware- oder softwaremässig implementierte Werkzeug (engl. tool) bezeichnet, das jedem Benutzer den Zugriff auf das Messaging System ermöglicht. Der Messagingclient kann daher sowohl von Benutzern eines anderen Messaging Systems mit dessen Sicherheitsprotokoll verschlüsselte Nachrichten empfangen und verarbeiten, als auch Nachrichten mit dem Sicherheitsprotokoll eines anderen Messaging Systems verschlüsseln und an dessen Benutzer versenden.

Erfindungsgemäss überprüft das Messaging System das Schlüsselzertifikat bzw. den PUK eines fremden Benutzers, d.h. eines Benutzers eines anderen Messaging Systems, ermittelt und verifiziert damit dessen Identität, stellt nach erfolgreicher Verifizierung ein eigenes Schlüsselzertifikat für den PUK dieses fremden Benutzers aus und veröffentlicht es anschliessend. Veröffentlichen heisst dabei, dass das Schlüsselzertifikat allen anderen Benutzern, seien es eigene oder fremde, bekannt gemacht wird. Dies erfolgt üblicherweise auf einem sogenannten Certification Server, auf dem die Schlüsselzertifikate abgespeichert und von allen Benutzern abgerufen werden können. Manchmal werden Schlüsselzertifikate auch einfach an andere Benutzer verschickt oder sie werden z.B. auf einer Internet-Seite für jedermann abrufbar deponiert.

Diese Konversion fremder Schlüsselzertifikate in eigene Schlüsselzertifikate kann entweder im Voraus geschehen, oder jeweils auf Anfrage eines eigenen Benutzers bzw. seines Messagingclients, wenn dieser eine Nachricht an einen fremden Benutzer absenden bzw. von diesem eine Nachricht empfangen möchte.

Unter der Voraussetzung, dass ein Benutzer das von einem fremden Benutzer verwendete Sicherheitsprotokoll kennt, ist er anhand eines solchen Schlüsselzertifikates, das sein eigenes Messaging System für den fremden Benutzer ausstellt, in der Lage, nicht nur die Vertraulichkeit, sondern auch die Authentizität und die Integrität der vom fremden Benutzer empfangenen Nachrichten zu überprüfen und sicherzustellen. Dabei ist das Vertrauen in die Authentizität aller anderen Benutzer in gleich hohem Masse gewährleistet und der Benutzer selber benötigt nur ein einziges PUK/PIK Schlüsselpaar, um Nachrichten zu verarbeiten, die mit einem beliebigen Sicherheitsprotokoll erstellt wurden.

Die Angaben über das Sicherheitsprotokoll können in einer separaten Datenbank auf dem Server abgespeichert sein, auf welche der Benutzer bei Bedarf jeweils zugreifen kann. Wechselt ein Benutzer auf ein anderes Protokoll, wird einfach der entsprechende Eintrag in der Datenbank angepaßt. Eine andere Ausführungsform der Erfindung besteht darin, dass beim Ausstellen des Schlüsselzertifikats für einen fremden Benutzer vom Messaging System zusammen mit dem PUK des fremden Benutzers nicht nur Angaben über dessen Identität, sondern zusätzlich auch Angaben über das von seinem Messaging System verwendete Sicherheitsprotokoll digital unterschrieben werden. Es kann ein sogenanntes Standardzertifikat gebildet werden, das, wie jedes andere Schlüsselzertifikat auch, auf einem Certification Server veröffentlicht wird. Mit diesen Angaben ist es möglich, auch mit einem fremden Benutzer, über den man weder Angaben über das verwendete Sicherheitsprotokoll, noch solche über dessen Identität hat, sicher zu kommunizieren. Im Unterschied zur erstgenannten Variante erfordert eine Änderung des benutzten Protokolls auch eine Anpassung des Standardzertifikates.

Bei einer weiteren bevorzugten Ausführungsform der Erfindung werden nicht nur fremde Schlüsselzertifikate in eigene Standardzertifikate konvertiert, sondern umgekehrt auch Standardzertifikate eigener Benutzer in fremde Schlüsselzertifikate. Wie eben beschrieben, stellt ein Messaging System für jeden eigenen Benutzer ein Standardzertifikat mit Angaben über das selber verwendete Sicherheitsprotokoll aus. Gemäss der Erfindung wird aber zusätzlich für jeden eigenen Benutzer auch ein Schlüsselzertifikat für jedes vom Messaging System unterstützte Sicherheitsprotokoll erstellt, wobei in jedem dieser Schlüsselzertifikate neben dem PUK und Angaben über die Identität des Benutzers auch Angaben über das Sicherheitsprotokoll, für welches das Schlüsselzertifikat erstellt wird, abgespeichert werden können. Auch diese Schlüsselzertifikate werden auf dem Certification Server veröffentlicht. Anhand dieser Schlüsselzertifikate ist es einem fremden Benutzer möglich, die empfangenen Nachrichten bezüglich Vertraulichkeit, Authentizität und Integrität zu überprüfen

Beim Versenden einer Nachricht an einen fremden Benutzer, dessen Messaging System zur Ver- bzw. Entschlüsselung der Nachrichten ein anderes, aber vom eigenen Messaging System unterstütztes, Sicherheitsprotokoll verwendet, wird folgendermassen vorgegangen: Zuerst wird die Nachricht mit dem Messagingclient erfasst und mit der Adresse des fremden Benutzers versehen. Daraufhin überprüft der Messagingclient anhand des Standardzertifikats die Identität bzw. den PUK des fremden Benutzers und beschafft sich so die Angaben über das von diesem resp. dessen Messaging System verwendete Sicherheitsprotokoll. Theoretisch gibt es nun zwei Möglichkeiten: Entweder wird die Nachricht mit dem Sicherheitsprotokoll des Empfängers oder mit dem eigenen Sicherheitsprotokoll verschlüsselt und verschickt. In der Praxis wird hauptsächlich die erste Möglichkeit zur Anwendung kommen. Zusätzlich kann die Nachricht natürlich auch noch digital unterschrieben werden.

Beim Empfang einer verschlüsselten Nachricht eines fremden Benutzers gibt es auch wiederum zwei Möglichkeiten. Verfügt der Absender über ein herkömmliches Messaging System, dann wird anhand seines Standardzertifikats zuerst das von ihm verwendete Sicherheitsprotokoll ermittelt und die Nachricht damit anschliessend verarbeitet und entschlüsselt. Verfügt er jedoch auch über ein erfindungsgemässes Messaging System und hat er die Nachricht mit dem Sicherheitsprotokoll des Empfängers verschlüsselt, kann der Empfänger anhand des vom anderen Messaging System für sein Sicherheitsprotokoll erstellten und veröffentlichten Schlüsselzertifikates des Absenders die Nachricht entschlüsseln. Ist die Nachricht zusätzlich digital unterschrieben, kann mit diesem Schlüsselzertifikat davor natürlich auch noch die Identität bzw. der PUK des Absenders überprüft werden.

Grundsätzlich ist es auch möglich, das Protokoll anhand des charakteristischen Aufbaus des (nicht verschlüsselten) Nachrichten-Headers zu identifizieren. Es ist also gar nicht unbedingt erforderlich, daß auf eine zentrale Datenbank zurückgegriffen wird, um das verwendete Protokoll zu ermitteln.

Ein Messaging System zur erfindungsgemässen Übertragung elektronischer Nachrichten zwischen Benutzern verschiedener Messaging Systeme besteht aus mindestens einem Messagingclient pro Benutzer, einer Certification-Administration-Einheit und einem Certification Server. Die Certification-Administration-Einheit verfügt über Mittel zum Erzeugen des PUK/PIK Schlüsselpaares sowie zum Ausstellen des Standardzertifikates für eigene Benutzer. Auf dem Certification Server ist ein Speicher vorgesehen, in dem die von der Certification-Administration-Einheit ausgestellten Standardzertifikate der eigenen Benutzer abgespeichert werden. Der Messagingclient verfügt gegenüber einem herkömmlichen Messagingclient zusätzlich über eine PUK-Prüfeinheit, mit der er auf den Speicher des Certification Server zugreifen und somit den PUK bzw. die Identität des Absenders einer Nachricht anhand dessen Standardzertifikates überprüfen und das vom Absender bzw. dessen Messaging System verwendete Sicherheitsprotokoll feststellen kann. Weiter verfügt der Messagingclient für jedes unterstützte Sicherheitsprotokoll über eine Vorrichtungen zum ver- bzw. entschlüsseln von Nachrichten. Eine Protokoll Managementeinheit koordiniert und steuert dabei sowohl die PUK-Prüfeinheit wie auch die Ver-/Entschlüsselungsvorrichtungen.

Vorzugsweise verfügt die Certification-Administration-Einheit zusätzlich über eine Zertifikatsanalyse-Einheit, welche ihr zur Überprüfung der PUKs bzw. der Identität fremder Benutzer dient und ihr gleichzeitig die zum Ausstellen des Standardzertifikats für diesen fremden Benutzer notwendigen Angaben wie z.B. "Identität" und "verwendetes Sicherheitsprotokoll" liefert. Der Certification Server besitzt neben dem Speicher für die Standardzertifikate bevorzugt eine Konversionseinheit, welche anhand der Standardzertifikate die Schlüsselzertifikate für die verschiedenen, vom Messaging System unterstützten, Sicherheitsprotokolle erstellt sowie mehrere zusätzliche Speicher, in welchen jeweils die für die verschiedenen Sicherheitsprotokolle konvertierten Schlüsselzertifikate abgespeichert und veröffentlicht (d. h. allen Benutzern zugänglich gemacht) werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Massaging Systems,
- Fig. 2: eine schematische Darstellung eines einzelnen Messagingclients.
Grundsätzlich sind in den Figuren gleiche Teile mit gleichen Bezugszeichen versehen.

### Wege zur Ausführung der Erfindung

Anhand des Ablaufs beim Versand bzw. Empfang einer elektronischen Nachricht zwischen einem eigenen und dem fremden Benutzer soll im folgenden das erfindungsgemässe Verfahren erläutert werden.

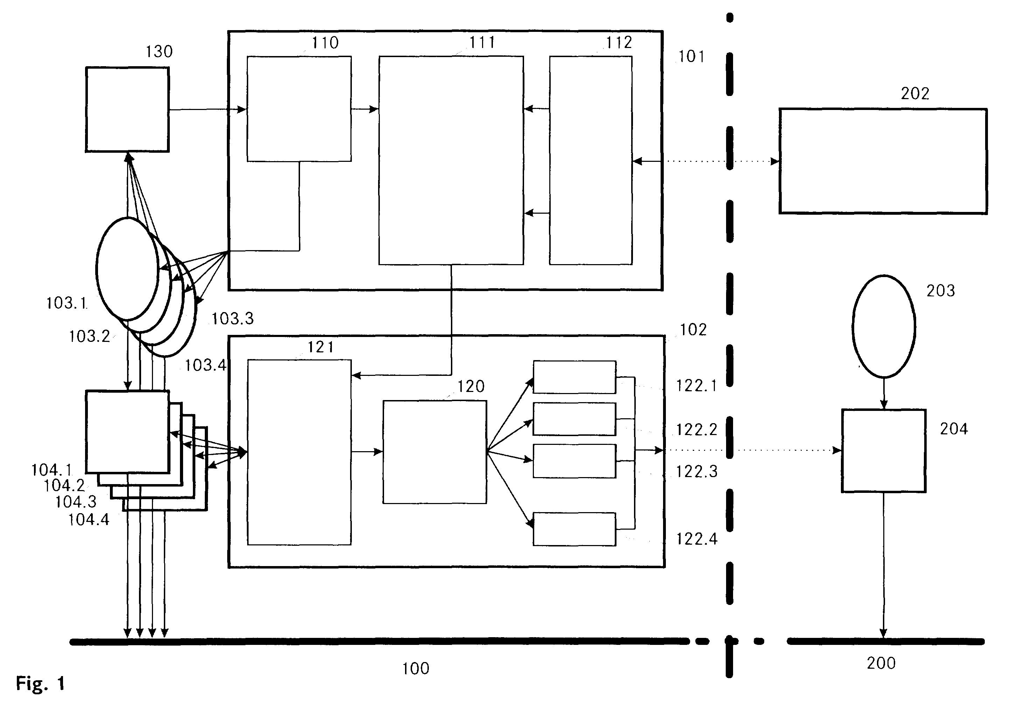

Figur 1 zeigt ein erfindungsgemässes Messaging System 100 mit einer Certification-Administration-Einheit 101, einem Certification Server 102 und mehreren eigenen Benutzern 103.1, 103.2, 103.3, 103.4 mit zugehörigem Messagingclient 104.1, 104.2, 104.3 bzw. 104.4. Zudem ist von einem anderen Messaging System 200 der Certification Server 202 und ein Benutzer 203 mit seinem Messagingclient 204 dargestellt. Die Certification-Administration-Einheit 101 umfasst einen Schlüsselgenerator 110, einen Zertifikatgenerator 111 sowie eine Zertifikatsimport- und -analysevorrichtung 112. Der Certification Server 102 besteht mindestens aus einer Konversionseinheit 120 und mehreren Speichern 121, 122.1, 122.2, 122.3, 122.4.

Auf dem Certification Server 202 des fremden Messaging Systems 200 ist das Schlüsselzertifikat des Benutzers 203 zusammen mit dessen PUK gespeichert und veröffentlicht. Die Zertifikatsimport- und -analysevorrichtung 112 überprüft zuerst das Schlüsselzertifikat des fremden Benutzers 203 mit dem PIK der Person oder Organisation, die das Schlüsselzertifikat ausgestellt hat, verifiziert selbständig die Identität des Benutzers 203 und ermittelt das von ihm verwendete Sicherheitsprotokoll. (Bei einer vereinfachten Ausführungsform können die genannten Verfahrensschritte auch manuell durchgeführt werden, d. h. der Benutzer muß die entsprechenden Angaben von Hand in eine Eingabemaske des Programms eingeben.) Der PUK, die überprüften Angaben zur Identität des fremden Benutzers 203 und Angaben über das von ihm verwendete Sicherheitsprotokoll werden an den Zertifikatgenerator 111 weitergegeben, der ein eigenes Standardzertifikat für den fremden Benutzer 203 erstellt, welches - soweit gewünscht - alle diese Informationen enthält. (Die Angaben über das verwendete Sicherheitsprotokoll können gemäß einer bevorzugten Ausführungsform in einer Datenbank abgespeichert werden. Das Standardzertifikat braucht also nicht zwingend alle Angaben des fremden Benutzers zu enthalten.) Auch für eigene Benutzer 103.1, 103.2, 103.3, 103.4 stellt der Zertifikatgenerator 111 Standardzertifikate mit denselben Informationen aus. Dazu übermittelt jeder Benutzer 103.1, 103.2, 103.3, 103.4 die notwendigen Angaben an eine Registrierungseinheit 130, welche diese Daten überprüft, verifiziert und an den Schlüsselgenerator 110 weiterleitet, welcher dann das PUK/PIK Schlüsselpaar generiert. Den PIK schickt er auf einem sicheren Weg zurück an den Benutzer 103.1, 103.2, 103.3, 103.4 und den PUK gibt er zusammen mit den restlichen Angaben an den Zertifikatgenerator 111 weiter, der damit wie schon erwähnt ein Standardzertifikat ausstellt.

Dieses Standardzertifikat wird anschliessend an den Certification Server 102 übergeben, der es zusammen mit dem PUK des Benutzers 103.1, 103.2, 103.3, 103.4 im Speicher 121 ablegt und veröffentlicht. Jeder Benutzer 103.1, 103.2, 103.3, 103.4 bzw. dessen Messagingclient 104.1, 104.2, 104.3,104.4 kann nun auf diesen Speicher 121 zugreifen und den PUK bzw. die Identität eines anderen, auch eines fremden Benutzers 203 anhand dessen Standardzertifikat überprüfen sowie das von ihm verwendete Sicherheitsprotokoll ermitteln.

Dadurch wird es für einen Benutzer 103.1, 103.2, 103.3, 103.4 möglich, Nachrichten an einen fremden Benutzer 203 mit dessen Sicherheitsprotokoll zu verschlüsseln und zu versenden bzw. Nachrichten von ihm zu empfangen, zu überprüfen, zu entschlüsseln und schliesslich zu lesen.

Damit ein fremder Benutzer 203 aber auch Nachrichten von einem eigenen Benutzer 103.1, 103.2, 103.3, 103.4 empfangen, überprüfen und entschlüsseln kann, die vom Benutzer 103.1, 103.2, 103.3, 103.4 mit dem eigenen Sicherheitsprotokoll erstellt wurden, muss er in der Lage sein, dessen Schlüsselzertifikat zu überprüfen. Das Standardzertifikat eignet sich dafür nicht, da es für ein anderes Sicherheitsprotokoll erstellt wurde. Deshalb ist im Certification Server 102 eine Konversionseinheit 120 vorgesehen, die sich die Standardzertifikate aus dem Speicher 121 holt und für jedes andere, von den Messagingclients 104.1, 104.2, 104.3,104.4 der Benutzer 103.1, 103.2, 103.3, 103.4 unterstützte, Sicherheitsprotokoll ein zusätzliches Schlüsselzertifikat erstellt, im entsprechenden Speicher 122.1, 122.2, 122.3, 122.4 ablegt und veröffentlicht.

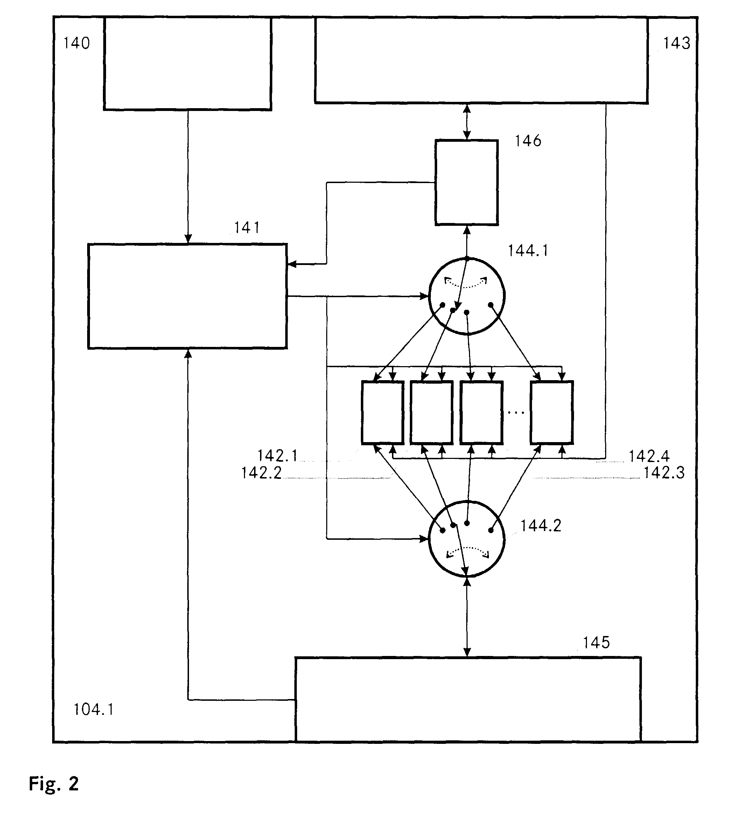

Figur 2 zeigt einen erfindungsgemässen Messagingclient 104.1, der gegenüber einem bekannten Messagingclient über zusätzliche Komponenten verfügt: Eine PUK-Prüfeinheit 140, eine Protokoll Managementeinheit 141 und mehrere Ver-/Entschlüsselungsvorrichtungen 142.1, 142.2, 142.3, 142.4. (Die Ver-/Entschlüsselungsvorrichtungen beinhalten auch die Funktionen, um - im Sinne der Erfindung - verschiedene Protokolle zu verarbeiten.) Beim Versenden einer Nachricht 146 erfasst der Benutzer 103.1 via Benutzerschnittstelle 143 sowohl die zu übermittelnden Daten als auch den oder die Adressaten. Die Protokoll Managementeinheit 141 untersucht die Nachricht 146 und ermittelt den oder die Adressaten und gibt deren Namen an die PUK-Prüfeinheit 140 weiter, welche auf dem Certification Server 102 das entsprechende Standardzertifikat holt, überprüft und den PUK extrahiert. Gleichzeitig stellt die PUK-Prüfeinheit 140 fest, welches das vom Adressaten verwendete Sicherheitsprotokoll ist (z. B. durch Abfragen der entsprechenden Datenbank oder durch Auswerten der allenfalls im Standardzertifikat enthaltenen Protokollangaben) und gibt diese Information an die Protokoll Managementeinheit 141 zurück, welche mittels Schaltern 144.1, 144.2 die entsprechende Ver-/Entschlüsselungsvorrichtung 142.1, 142.2, 142.3, 142.4 für das jeweilige Sicherheitsprotokoll auswählt. Anschliessend wird die Nachricht 146 entsprechend dem ausgewählten Sicherheitsprotokoll verarbeitet und via Sende/Empfangseinheit 145 an den Adressaten verschickt. Soll die Nachricht 146 verschlüsselt werden, wird der PUK des Adressaten von der Protokoll Managementeinheit 141 an die aktive Ver-/Entschlüsselungsvorrichtung 142.1, 142.2, 142.3, 142.4 weitergegeben.

Ähnlich ist der Ablauf beim Empfangen einer Nachricht. Die Protokoll Managementeinheit 141 untersucht die Nachrichten, die von der Sende/Empfangseinheit 145 empfangen werden, gibt den Namen (Identifikation) des Absenders an die PUK-Prüfeinheit 140 weiter, welche wiederum anhand des Standardzertifikates auf dem Certification Server 102 den PUK ermittelt bzw. die Identität des Absenders überprüft und das entsprechende Sicherheitsprotokoll feststellt. Die PUK-Prüfeinheit 140 meldet das verwendete Sicherheitsprotokoll zurück an die Protokoll Managementeinheit 141, welche wiederum mittels Schaltern 144.1, 144.2 die entsprechende Ver-/Entschlüsselungseinheit 142.1, 142.2, 142.3, 142.4 aktiviert, die Nachricht 146 damit verarbeitet und schliesslich via Benutzerschnittstelle 143 an den Benutzer 103.1 ausgibt. Mit Hilfe seines PIK, den der Benutzer 103.1 ebenfalls via Benutzerschnittstelle 143 eingibt, kann eine verschlüsselte Nachricht entschlüsselt werden.

Bei Sicherheitsprotokollen (wie z. B. Open PGP), welche ohne übergeordnete Zentrale arbeiten, tritt anstelle eines Zertifikats z. B. ein sogenannter Keyring. Bei diesem handelt es sich um einen oder mehrere Public Keys, welche von verschiedenen Personen digital signiert sein können. Es bleibt dann dem Benutzer überlassen, unter welchen Umständen er einen bestimmten Schlüssel als vertrauenswürdig akzeptieren will.

Zusammenfassend ist festzustellen, dass es die Erfindung erlaubt, mit einem einzigen Messaging System und mithin mit einem einzigen Messagingclient Nachrichten unter Gewährleistung von Vertraulichkeit, Authentizität und Integrität an beliebige Benutzer des gleichen oder eines fremden Messaging Systems zu versenden bzw. von diesen zu empfangen, ohne sich darum kümmern zu müssen, ob der Messagingclient des Empfängers dasselbe oder ein anderes Sicherheitsprotokoll zur Verarbeitung der Nachrichten verwendet. Einzige Voraussetzung dafür ist, dass die verwendeten Sicherheitsprotokolle auf einem "public key"-Verschlüsselungsverfahren basieren.

## Patentansprüche

1. Verfahren zur Übertragung elektronischer Nachrichten zwischen einem Benutzer eines ersten Messaging Systems und einem Benutzer eines zweiten Messaging Systems, wobei beide Messaging Systeme mindestens einen Messagingclient pro Benutzer aufweisen, die jeweils eine auf dem "public key"-Verfahren basierende Verschlüsselungsmethode mit jeweils einem eigenen Sicherheitsprotokoll verwenden, jeder Benutzer ein komplementäres Schlüsselpaar, bestehend aus einem public key und einem private key, besitzt und jedes Messaging System ein Schlüsselzertifikat für den public key des eigenen Benutzers ausstellt und veröffentlicht, dadurch gekennzeichnet, dass der Messagingclient des ersten Messaging Systems zur Verarbeitung der Nachrichten zusätzlich zum eigenen Sicherheitsprotokoll zumindest das Sicherheitsprotokoll der Messagingclients des zweiten Messaging Systems verwendet und dass das erste Messaging System das Schlüsselzertifikat des fremden Benutzers überprüft und für dessen public key ein eigenes Schlüsselzertifikat ausstellt und veröffentlicht.

2. Verfahren nach Anspruch 1, dadurch gekennzeichnet, dass zur Bildung von Standardzertifikaten in den vom ersten Messaging System für den eigenen und den fremden Benutzer ausgestellten Schlüsselzertifikaten Angaben über das vom Messagingclient des jeweiligen Benutzers verwendete Sicherheitsprotokoll gespeichert werden.

3. Verfahren nach Anspruch 1, dadurch gekennzeichnet, daß in einer allen Benutzern zugänglichen Datenbank des Messaging Systems Angaben über das vom Messagingclient des jeweiligen Benutzers verwendete Sicherheitsprotokoll gespeichert werden.

4. Verfahren nach Anspruch 2, dadurch gekennzeichnet, dass das erste Messaging System das Standardzertifikat des eigenen Benutzers in zusätzliche Schlüsselzertifikate konvertiert, wobei vom ersten Messaging System zumindest für das von den Messagingclients des zweiten Messaging Systems verwendete Sicherheitsprotokoll ein zusätzliches Schlüsselzertifikat ausgestellt und veröffentlicht wird.

5. Verfahren nach Anspruch 2 oder 4, dadurch gekennzeichnet, dass der Messagingclient des Benutzers des ersten Messaging Systems anhand der Angaben über das vom fremden Benutzer verwendete Sicherheitsprotokoll in dessen Standardzertifikat, Nachrichten in dem vom fremden Benutzer verwendeten Sicherheitsprotokoll versendet resp. empfängt.

6. Messaging System mit mindestens einem Messagingclient pro Benutzer, einer Certification-Administration-Einheit und einem Certification Server zur Durchführung des Verfahrens nach Anspruch 1, wobei die Certification-Administration-Einheit Mittel zur Erzeugung des Schlüsselpaares und des Schlüsselzertifikates des public keys eines Benutzers und der Certification Server einen Speicher zur Speicherung und Veröffentlichung der Schlüsselzertifikate aufweist, dadurch gekennzeichnet, dass jeder Messagingclient eine PUK-Prüfeinheit zur Überprüfung des Schlüsselzertifikates eines fremden Benutzers, eine Protokoll Managementeinheit zur Bestimmung des zu verwendenden Sicherheitsprotokolls und mehrere Ver-/Entschlüsselungsvorrichtungen zur Verarbeitung empfangener bzw. zu sendender Nachrichten aufweist, wobei die PUK-Prüfeinheit den im Schlüsselzertifikat des fremden Benutzers gespeicherten public key sowie die Angaben über das verwendete Sicherheitsprotokoll an die Protokoll Managementeinheit weitergibt, welche darauf die entsprechende Ver-/Entschlüsselungsvorrichtung zur Verarbeitung der Nachricht aktiviert.

7. Messaging System nach Anspruch 6, dadurch gekennzeichnet, dass die Certification-Administration-Einheit zusätzlich eine Zertifikatsanalyse-Einheit aufweist und im Certification Server Mittel zur Konversion eines Standardzertifikates in je ein weiteres Schlüsselzertifikat pro unterstütztes Sicherheitsprotokoll mit jeweils einem Hinweis auf dieses Sicherheitsprotokoll vorgesehen sind.
